# EUROPÄISCHE PATENTSCHRIFT

(11) **EP 1 744 096 B1**
(45) Veröffentlichungstag und Bekanntmachung des Hinweises auf die Patenterteilung: **17.06.2009**
(21) Anmeldenummer: 06116620.3
(22) Anmeldetag: 05.07.2006
(51) Int. Cl.: F21S 8/10, F21V 8/00, F21W 101/12, F21W 101/14

(54) **Leuchte für Fahrzeuge**
Vehicle light
Feu pour véhicule automobile

(30) Priorität: 13.07.2005 DE 102005032650
(43) Veröffentlichungstag der Anmeldung: 17.01.2007
(73) Patentinhaber: Hella KGaA Hueck & Co., 59552 Lippstadt (DE)
(72) Erfinder: Mügge, Martin, 59590 Geseke (DE)
(74) Vertreter: Ostermann, Thomas

(56) Entgegenhaltungen:
- WO-A-20/04104642
- DE-A1- 10 314 257
- DE-A1- 10 330 261
- DE-A1- 10 336 162
- US-A1- 2004 208 019

## Beschreibung

Die Erfindung betrifft eine Leuchte für Fahrzeuge mit einer Lichtquelle, mit einem der Lichtquelle in Hauptabstrahlrichtung vorgelagerten Lichtleitelement, wobei das Lichtleitelement auf einer der Lichtquelle zugewandten Seite eine Lichteinkoppelfläche und auf einer der Lichtquelle abgewandten Seite einen Seitenablenkungsabschnitt mit einer Totalreflexionsfläche aufweist, so dass das auf der Totalreflexionsfläche treffende Licht quer zur Hauptabstrahlrichtung reflektiert wird hin zu einer Lichtauskoppelfläche des Seitenablenkungsabschnitts und mit einem sich aus der Ebene der Lichtquelle mit einem Innenrand im Bereich derselben topfförmig nach vorne biszu einem Außenrand erstreckenden Reflektor.

Aus der DE 103 36 162 A1 ist eine Leuchte mit einer Lichtquelle und einem Lichtleitelement bekannt, das im Wesentlichen zylinderförmig ausgebildet ist und auf einer der Lichtquelle abgewandten Seite einen gekrümmten Seitenablenkungsabschnitt aufweist. Das in das Lichtleitelement eingekoppelte Licht wird erstmalig und mehrmalig im stirnseitigen Seitenablenkungsabschnitt totalreflektiert und über eine radial außen liegende Ringfläche desselben in Richtung eines Reflektors ausgekoppelt. Der Reflektor ist rotationsparaboloidförmig ausgebildet, wobei der Brennpunkt des Reflektors auf der optischen Achse der Leuchte liegt. Die Lichtquelle ist in einer zentralen Öffnung des Reflektors angeordnet. Das Lichtleitelement ist in Hauptabstrahlrichtung vor der Lichtquelle angeordnet. Nachteilig an der bekannten Leuchte ist, dass das von dem Lichtleitelement emittierte Licht nicht gleichmäßig auf die Fläche des Reflektors trifft. Ferner ist es erforderlich, dass der Reflektor auf einen auf der optischen Achse liegenden Brennpunkt ausgerichtet ist.

Aus der DE 103 30 261 A1 ist eine Leuchte für Fahrzeuge mit einer Lichtquelle, einem Lichtleitelement und einem Reflektor bekannt. Das Lichtleitelement weist auf einer der Lichtquelle abgewandten Seite einen Seitenablenkungsabschnitt mit einer Totalreflexionsfläche auf, an der das auftreffende Licht quer zur Hauptabstrahlrichtung hin zu einer randseitigen Lichtauskoppelfläche reflektiert wird. Nachteilig an der bekannten Leuchte ist jedoch, dass das Licht in einem sehr kleinen Winkelbereich seitlich zu der Fläche des Reflektors abgestrahlt wird, wobei die Leuchtdichte in Folge der unterschiedlichen Länge des Lichtweges in einem inneren Bereich der Reflektorfläche sehr viel größer ist als in einem äußeren Bereich der Reflektorfläche. Auf Grund des engen Lichtabstrahlbereiches ist die Leuchte relativ empfindlich bezüglich Positionierungstoleranzen.

Es ist daher Aufgabe der vorliegenden Erfindung, eine Leuchte für Fahrzeuge derart weiterzubilden, dass das von einer Lichtquelle abgestrahlte Licht von einem Lichtleitelement derart beeinflusst wird, dass das Licht homogen verteilt auf eine Fläche des Reflektors geleitet wird.

Zur Lösung dieser Aufgabe ist die Erfindung in Verbindung mit dem Oberbegriff des Patentanspruchs 1 dadurch gekennzeichnet, dass das Lichtleitelement mindestens einen Bauchabschnitt mit einer Totalreflexionsfläche aufweist, an der das einfallende Licht nach vorne in Richtung des Seitenablenkungsabschnittes reflektiert wird und dass das Licht von der Totalreflexionsfläche des Seitenablenkungsabschnitts in einen im Bereich der Lichtauskoppelfläche angeordneten Konzentrationsbereich konvergiert wird, so dass das Licht fächerartig zumindest in einer Radialebene einen solchen Winkelbereich aufspannt, dass eine Fläche des Reflektors zwischen dem Innenrand des Reflektors und dem Außenrand des Reflektors erfasst wird.

Der besondere Vorteil der Erfindung besteht darin, dass mittels des Lichtleitelementes eine relativ gleichmäßige Verteilung des Lichtes auf den das Lichtleitelement umgebenden Reflektor ermöglicht wird. Es wird somit eine weitgehende homogene Ausleuchtung des Reflektors erzielt. Der Reflektor kann relativ flach ausgebildet sein. Das durch den Reflektor in die Umgebung abgestrahlte Lichtbündel weist ebenfalls eine homogene Lichtverteilung auf.

Grundgedanke der Erfindung ist es, das in das Lichtleitelement eingekoppelte Licht derart zu bündeln, dass sich an einem radialen Außenrand des Seitenablenkungsabschnittes eine Konzentration bzw. ein Brennort einstellt. Dieser Konzentrationsbereich ist nahe der Auskoppelfläche, so dass die Lichtstrahlen in einem relativ weiten Winkelbereich und homogen in Richtung der Reflektorfläche austreten können.

Nach einer Weiterbildung der Erfindung weist das Lichtleitelement einen Bauchabschnitt auf, der vorzugsweise eine elliptische Mantelfläche aufweist und das Licht durch Totalreflexion in einen Übergangsbereich zwischen dem Bauchabschnitt und dem Seitenablenkungsabschnitt konvergiert. Die Lichtstrahlen treten unter einem spitzen Öffnungswinkel in den Seitenablenkungsabschnitt ein, wobei eine Mittelachse der Lichtstrahlen einen spitzen Winkel zu der optischen Achse bildet.

Nach einer Weiterbildung der Erfindung ist die Totalreflexionsfläche des Seitenablenkungsabschnittes im Radialschnitt tellerförmig ausgebildet und ermöglicht die unter einem spitzen Winkel einfallenden Lichtstrahlen derart zu reflektieren, dass sie an einem äußeren Rand des Seitenablenkungsabschnittes konvergieren. In diesem Konzentrationsbereich bildet sich eine kreisförmige Brennlinie, auf die die Reflektorfläche ausgelegt ist. Vorteilhaft kann hierdurch ein relativ flacher Reflektor ausgebildet werden.

Nach einer Weiterbildung der Erfindung ist der Seitenablenkungsabschnitt rotationssymmetrisch ausgebildet. Die Totalreflexionsflächen des Seitenablenkungsabschnittes bilden eine Tellerfläche, so dass die Lichtstrahlen über den gesamten Umfang des Tellers ausgekoppelt werden können.

Nach einer Weiterbildung der Erfindung ist zwischen dem Bauchabschnitt und dem Seitenablenkungsabschnitt des Lichtleitelementes ein Einschnürungsabschnitt angeordnet, so dass eine vordere Ringfläche des Bauchabschnittes gebildet wird zur Auskoppelung eines Teillichtbündels im Wesentlichen in Hauptabstrahlrichtung. Hierdurch kann der Eindruck eines dunklen Fassungsloches des Reflektors bzw. der Leuchte vermieden werden, wenn eine vorgelagerte Lichtscheibe Optikelemente aufweist.

Nach einer Weiterbildung der Erfindung kann ein vorderer Rand des Seitenablenkungsabschnittes mit einer Mehrzahl von Prismen versehen sein, die eine Parallelisierung des nach vorne abgestrahlten Teillichtbündels ermöglichen.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: einen Horizontalschnitt durch eine Leuchte mit einem Lichtleitelement nach einer ersten Ausführungsform,
- Figur 2a: eine perspektivische Vorderansicht des Lichtleitelementes nach der ersten Ausführungsform gemäß Figur 1,
- Figur 2b: eine perspektivische Rückansicht des Lichtleitelementes nach der ersten Ausführungsform gemäß Figur 1,
- Figur 2c: eine Seitenansicht des Lichtleitelementes nach der ersten Ausführungsform gemäß Figur 1,
- Figur 3: einen Horizontalschnitt durch eine Leuchte mit einem Lichtleitelement nach einer zweiten Ausführungsform,
- Figur 4a: eine perspektivische Vorderansicht der Leuchte gemäß der zweiten Ausführungsform nach Figur 3,
- Figur 4b: eine perspektivische Vorderansicht des Lichtleitelementes gemäß der zweiten Ausführungsform nach Figur 3,
- Figur 4c: eine perspektivische Rückansicht des Lichtleitelementes gemäß der zweiten Ausführungsform nach Figur 3,
- Figur 5: einen Horizontalschnitt durch ein Lichtleitelement nach einer dritten Ausführungsform,
- Figur 6a: eine perspektivische Rückansicht des Lichtleitelementes nach der dritten Ausführungsform gemäß Figur 5,
- Figur 6b: eine perspektivische Seitenansicht des Lichtleitelementes nach der dritten Ausführungsform gemäß Figur 5,
- Figur 7: eine perspektivische Darstellung einer Leuchte nach einer vierten Ausführungsform mit einem abgeflachten Reflektor,
- Figur 8a: eine perspektivische Vorderansicht eines Lichtleitelementes nach einer fünften Ausführungsform,
- Figur 8b: eine perspektivische Rückansicht des Lichtleitelements nach der fünften Ausführungsform,
- Figur 8c: eine perspektivische Seitenansicht des Lichtleitelementes nach der fünften Ausführungsform und
- Figur 8d: eine perspektivische Rückansicht des Lichtleitelementes nach der fünften Ausführungsform.

Eine Leuchte für Fahrzeuge nach der Erfindung kann beispielsweise als Bremslicht-, Blinklicht-, Schlusslicht-, Nebelschlusslicht- oder Rückfahrlichtleuchte eingesetzt sein. In der Regel sind die Lichtquellen der erfindungsgemäßen Leuchte dafür ausgelegt, eine Mindestfläche von 50 cm² zu beleuchten. Demnach kann insbesondere für das Blink- und Bremslicht die gesetzliche Forderung lediglich mittels einer einzigen Lichtquelle erfüllt werden. Alternativ können auch mehrere Lichtquellen in einer Matrixanordung angeordnet sein.

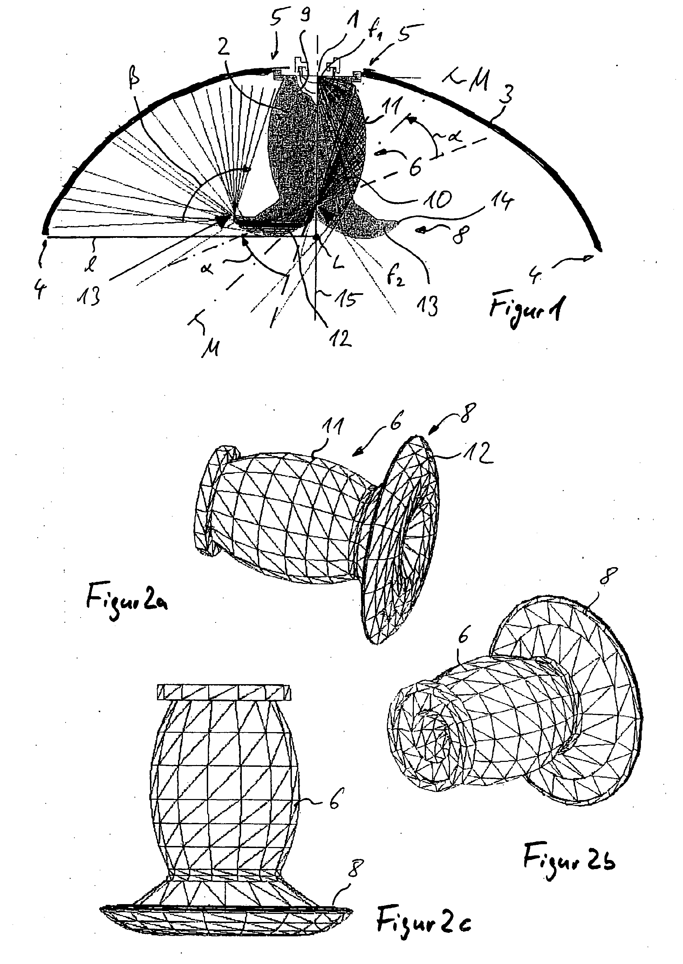

Eine Leuchte nach einer ersten Ausführungsform gemäß den Figuren 1 und 2 besteht im Wesentlichen aus einer Lichtquelle 1, einem Lichtleitelement 2 und einem Reflektor 3. An einer Vorderseite der Leuchte kann eine nicht dargestellte Lichtscheibe vorgesehen sein, die in üblicherweise in eine vordere Öffnung des die Leuchte aufnehmenden Gehäuses eines Kraftfahrzeugs abdeckt.

Die Lichtquelle 1 ist als Leuchtdiode ausgebildet, beispielsweise als LED-Chip.

Der Reflektor 3 ist topfförmig ausgebildet und verfügt über einen vorderen Außenrand 4 und einen hinteren Innenrand 5. Der Innenrand 5 bildet eine zentrale Öffnung, in der die Lichtquelle 1 bzw. vorderseitig anschließend das Lichtleitelement 2 angeordnet ist.

Das Lichtleitelement 2 besteht im Wesentlichen aus einem Bauchabschnitt 6 und einem sich in Hauptabstrahlrichtung 7 der Leuchte einstückig anschließenden Seitenablenkungsabschnitt 8.

Auf einer der Lichtquelle 1 zugewandten Seite weist das Lichtleitelement 2 eine konkavförmige Lichteinkoppelfläche 9 auf, mittels derer das von der Lichtquelle 1 emittierte Lichtbündel 10 in das Lichtleitelement 2 eingespeist wird.

Der Bauchabschnitt 6 weist eine elliptische Mantelfläche 11 auf, die sich langgestreckt in Hauptabstrahlrichtung 7 erstreckt. Die ellipsoidförmige Mantelfläche 11 bildet eine Totalreflexionsfläche, an der die Lichtstrahlen 10 in Richtung eines zweiten Brennpunktes f₂ abgelenkt werden. Die Lichtquelle 1 befindet sich in einem ersten Brennpunkt f₁ der elliptischen Mantelfläche 11. Der zweite Brennpunkt f₂ befindet sich in einem Übergangsbereich zwischen dem Bauchabschnitt 6 und dem Seitenablenkungsabschnitt 8. Die Lichtstrahlen 10 treten unter einem spitzen Öffnungswinkel α in den Seitenablenkungsabschnitt 8 ein und werden an einer vorderen tellerförmigen Totalreflexionsfläche 12 des Seitenablenkungsabschnittes 8 zum zweiten Mal totalreflektiert, und zwar in Richtung eines Konzentrationsbereiches 13, der sich im Bereich einer umlaufenden ringförmigen Lichtauskoppelfläche 14 des Seitenablenkungsabschnittes 8 befindet.

Eine Mittelachse M der unter dem Öffnungswinkel α in den Seitenablenkungsabschnitt 8 eintretenden Lichtstrahlen 10 bildet zu einer optischen Achse 15 der Leuchte einen spitzen, vorzugsweise einen Winkel von 45°. Die Länge der Totalreflexionsfläche 12 ist derart auf den Öffnungswinkel α des Lichtbündels 10 abgestimmt, dass im Wesentlichen alle Lichtstrahlen 10 reflektiert und in Richtung des Konzentrationsbereiches 13 konvergiert werden. Aus der konvexförmigen Lichtauskoppelfläche 14 treten die Lichtstrahlen 10 unter einem relativ großen Austrittswinkelbereich β aus, der vorzugsweise stumpf ausgebildet ist.

Somit ist gewährleistet, dass die Fläche des Reflektors 3 gleichmäßig zwischen dem Außenrand 4 und dem Innenrand 5 ausgeleuchtet wird.

Da das Lichtleitelement 2 bzw. der Bauchabschnitt 6 sowie der Seitenablenkungsabschnitt 8 rotationssymmetrisch ausgebildet sind, ist der Konzentrationsbereich 13 als eine kreisförmige Brennlinie ausgebildet, in der alle Lichtstrahlen 10 zusammenlaufen. Die kreisförmige Brennlinie ist koaxial zu der optischen Achse 15 orientiert. Der Reflektor 3 ist mit seinen Flächen auf die kreisförmige Brennlinie ausgelegt und kann hierdurch vorteilhaft relativ flach ausgebildet sein. Bei einem von dem Außenrand 4 des Reflektors 3 gebildeten Lot I zur optischen Achse 15 ergibt sich ein Lotfußpunkt L, der im Bereich des vorderen Randes des Lichtleitelementes 2 angeordnet ist.

Die Reflektorflächen sind derart segmentiert ausgebildet, dass eine vorgegebene Lichtverteilung erzeugt wird. Die Flächen des Reflektors 3 können beispielsweise paraboloidförmig oder als Freiflächen ausgelegt sein. Vorzugsweise werden die Lichtstrahlen 10 parallel zur optischen Achse 15 von dem Reflektor 3 abgestrahlt.

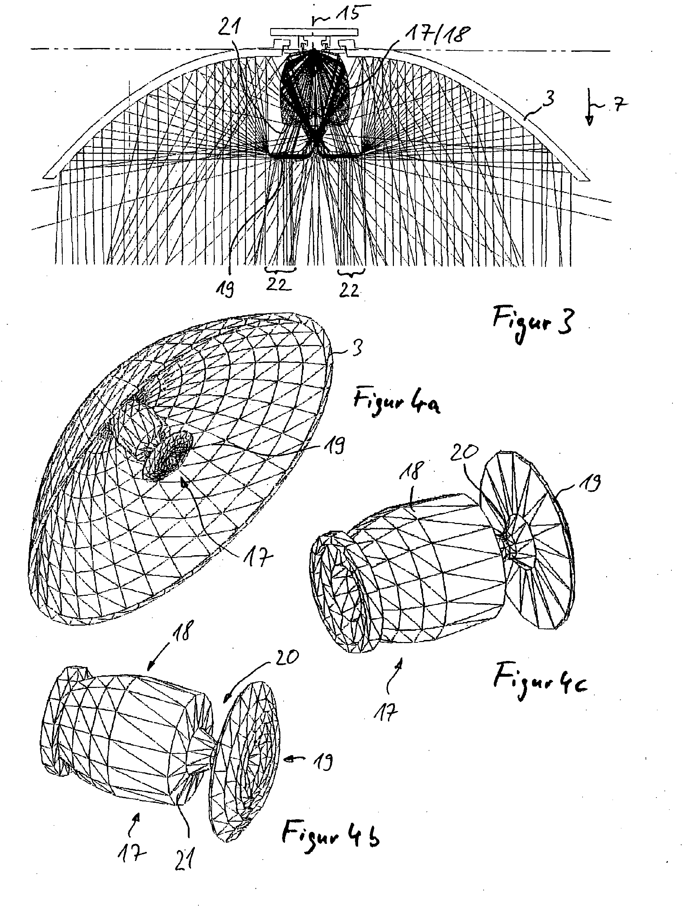

Nach einer zweiten Ausführungsform einer Leuchte gemäß den Figuren 3 bis 4 ist im Unterschied zu dem vorhergehenden Ausführungsbeispiel ein Lichtleitelement 17 vorgesehen, das in einem Übergangsbereich zwischen einem Bauchabschnitt 18 und einem Seitenablenkungsbereich 19 einen Einschnürungsabschnitt 20 aufweist. Hierdurch kann auf einer der Lichtquelle 1 abgewandten Seite des Bauchabschnitts 18 eine Ringfläche 21 gebildet sein, durch die ein Teillichtbündel 22 im Wesentlichen in Hauptabstrahlrichtung 7 ausgekoppelt wird. Das Teillichtbündel 22 tritt durch die tellerförmigen Abschnitte des Seitenablenkungsabschnitts 19 durch, so dass sie im Wesentlichen parallel zur optischen Achse 15 aus dem Gehäuse austreten. Hierdurch kann ein Lichtanteil der Leuchte direkt nach vorne ausgekoppelt werden, so dass kein dunkles ?Fassungsloch" in der Gesamtausleuchtung der Leuchte erzeugt wird. Vorzugsweise weist die nicht dargestellte Lichtscheibe eine Optikstruktur auf.

Nach einer nicht dargestellten Ausführungsform der Erfindung können die Totalreflexionsflächen 12 des Seitenablenkungsabschnittes 8, das heißt der vordere Rand des Seitenablenkungsabschnittes 8 mit einer Mehrzahl von Prismen als Optikelemente versehen sein, so dass das austretende Licht parallelisiert wird.

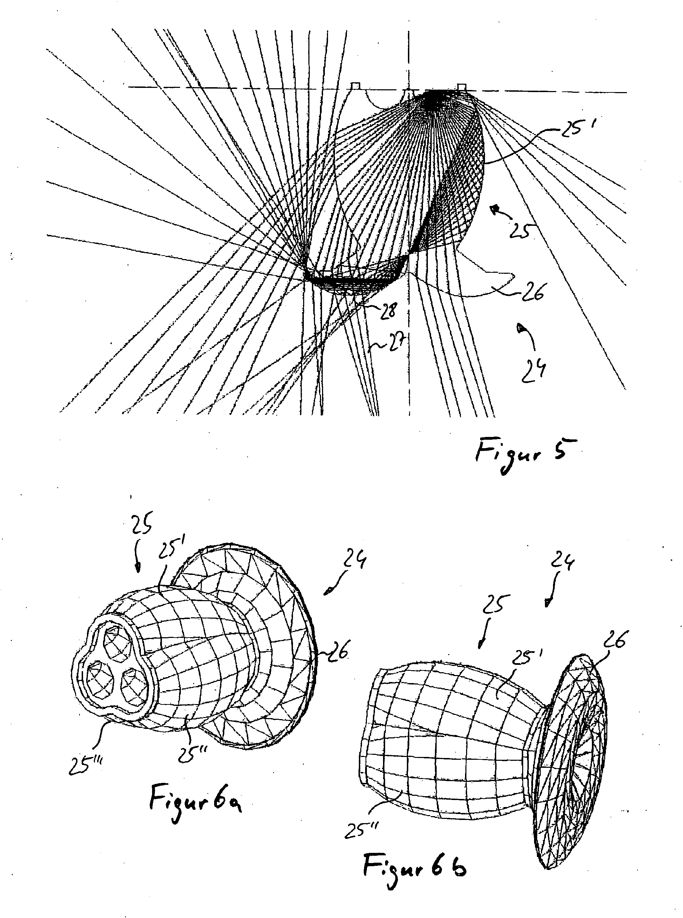

Nach einer dritten Ausführungsform einer Leuchte gemäß den Figuren 5 bis 6 kann ein Lichtleitelement 24 eingangsseitig auch drei Lichtquellen zugeordnet sein. Für diesen Fall besteht der Bauchabschnitt 25 des Lichtleitelementes 24 aus zu der Anzahl der Lichtquellen korrespondierenden teilelliptischen Flächen 25', 25", 25'''. Die elliptischen Teilmantelflächen 25', 25", 25''' des Bauchabschnitts 25 laufen in Richtung eines Seitenablenkungsabschnitts 26 zusammen. Wie aus Figur 5 ersichtlich ist, kann es vorkommen, dass ein in dem Bauchabschnitt 25', 25", 25''' reflektiertes Teillichtbündel 27 durch einen vorderen Rand 28 des Seitenablenkungsabschnitts 26 gebrochen und nach vorne abgestrahlt wird.

Eine nicht dargestellte vereinfachte Ausführungsform des Lichtleitelements 24 kann darin bestehen, dass auf einer Lichteinkoppelseite drei konvexförmige Aufnahmen für eine Lichtquelle vorgesehen sind, der Bauchabschnitt 25 jedoch eine einteilige elliptische Mantelfläche aufweist.

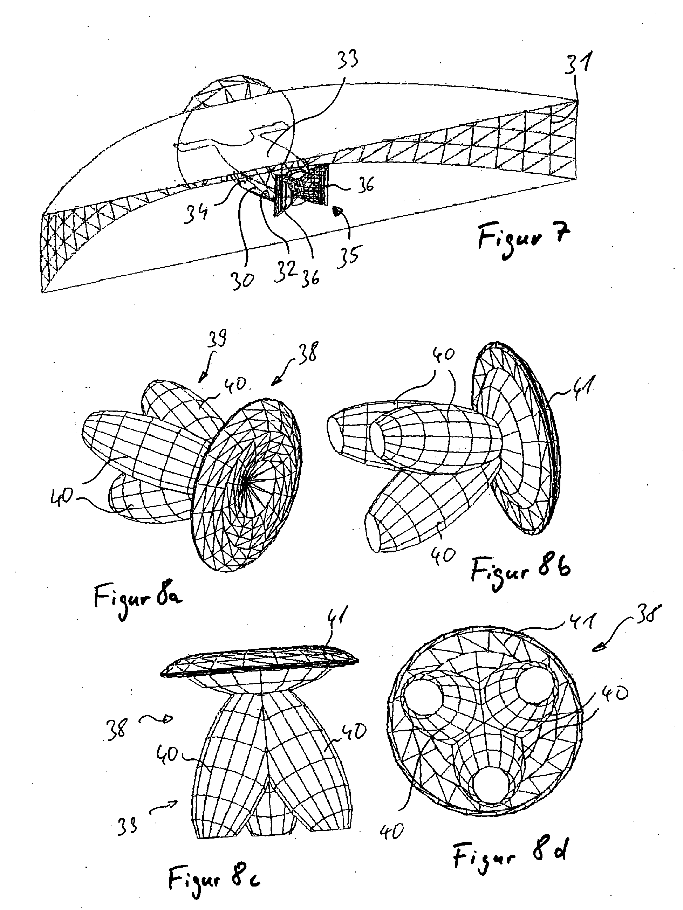

Nach einer weiteren Ausführungsform der Leuchte gemäß Figur 7 können ein abgeflachtes Lichtleitelement 30 und ein abgeflachter Reflektor 31 vorgesehen sein. Diese Leuchte ist beispielsweise als Zusatzbremsleuchte einsetzbar. Das Lichtleitelement 30 weist einen abgeflachten Bauchabschnitt 32 mit ebenen Seitenflächen 33 und ellipsoidförmigen Seitenflächen 34 auf. Ein Seitenablenkungsabschnitt 35 ist fliegeförmig ausgebildet und weist in der Erstreckungsebene des Reflektors 31 zwei gegenüberliegende Seitenablenkungsfinger 36 auf. Der grundsätzliche Aufbau stimmt mit den vorhergehenden Ausführungsbeispielen überein.

Nach einer weiteren Ausführungsform der Leuchte gemäß den Figuren 8 ist ein Lichtleitelement 38 vorgesehen, dass einen Bauchabschnitt 39 mit drei Teilfingern 40 aufweist. Die Teilfinger 40 weisen jeweils elliptische Mantelflächen auf und laufen im Vergleich zu der Ausführungsform nach der Figur 6 in einem zu einem Seitenablenkungsabschnitt 41 nahen Bereich zusammen. Vorteilhaft können hierbei die Lichtquellen in einem größeren Abstand zueinander angeordnet sein. Gegebenenfalls können die Lichtquellen auch in einer unterschiedlichen Ebene, die parallel zur Erstreckungsebene des Seitenablenkungsabschnitts 41 verläuft, angeordnet sein.

Es versteht sich, dass die Funktion der Bauchabschnitte und der Seitenablenkungsabschnitte der Lichtleitelemente bei den genannten Ausführungsbeispielen gleich bzw. ähnlich ist.

## Patentansprüche

1. Leuchte für Fahrzeuge mit einer Lichtquelle (1), mit einem der Lichtquelle (1) in Hauptabstrahlrichtung vorgelagerten Lichtleitelement (2, 17, 24, 30, 38), wobei das Lichtleitelement (2,17,24,30,38) auf einer der Lichtquelle (1) zugewandten Seite eine Lichteinkoppelfläche (9) und auf einer der Lichtquelle abgewandten Seite einen Seitenablenkungsabschnitt (8, 19, 26, 35, 41) mit einer Totalreflexionsfläche (12) aufweist, so dass das auf der Totalreflexionsfläche (12) treffende Licht quer zur Hauptabstrahlrichtung reflektiert wird hin zu einer Lichtauskoppelfläche (14) des Seitenablenkungsabschnitts (8, 19, 26, 35, 41) und mit einem sich aus der Ebene der Lichtquelle (1) mit einem Innenrand im Bereich derselben topfförmig nach vorne bis zu einem Außenrand erstreckenden Reflektor (3), **dadurch gekennzeichnet, dass** das Lichtleitelement (2, 17, 24, 30, 38) mindestens einen Bauchabschnitt (6, 18, 25, 32, 39) mit einer Totalreflexionsfläche (11) aufweist, an der das einfallende Licht (10) nach vorne in Richtung des Seitenablenkungsabschnittes (8, 19, 26, 35, 41) reflektiert wird und dass das Licht (10) von der Totalreflexionsfläche (12) des Seitenablenkungsabschnitts (8, 19, 26, 35, 41) in einen im Bereich der Lichtauskoppelfläche (14) angeordneten Konzentrationsbereich (13) konvergiert wird, so dass das Licht (10) fächerartig zumindest in einer Radialebene einen solchen Winkelbereich (β) aufspannt, dass eine Fläche des Reflektors (3) zwischen dem Innenrand (5) des Reflektors (3) und dem Außenrand (4) des Reflektors (3) erfasst wird.

2. Leuchte nach Anspruch 1, **dadurch gekennzeichnet, dass** die Totalreflexionsflächen (11, 12) des Bauchabschnitts (6, 18, 25, 32, 39) und des Seitenablenkungsabschnitts (8, 19, 26, 35, 41) derart geformt ist, dass das durch die außenrandseitig angeordnete Lichtauskoppelfläche (14) des Seitenablenkungsabschnitts (8, 19, 26, 35, 41) ausfallende Licht (10) gleichmäßig auf die Fläche des Reflektors (3) gelenkt wird.

3. Leuchte nach Anspruch 1 oder 2, **dadurch gekennzeichnet, dass** die Totalreflexionsfläche (11) des Bauchabschnitts (6) eine elliptische Mantelfläche bildet, in dessen ersten Brennpunkt (f₁) die Lichtquelle (1) angeordnet ist und die das einfallende Licht (10) in einem zweiten Brennpunkt (f₂) konvergiert, der in einem Übergangsbereich zwischen dem Bauchabschnitt (6, 18, 25, 32, 39) und dem Seitenablenkungsabschnitt (8, 19, 26, 35, 41) liegt.

4. Leuchte nach einem der Ansprüche 1 bis 3, **dadurch gekennzeichnet, dass** die Totalreflexionsfläche (12) des Seitenablenkungsabschnitts (8, 19, 26, 41) im Radialschnitt tellerförmig ausgebildet ist und dass der Konzentrationsbereich (13) an einem in radialer Richtung äußeren Rand des Seitenablenkungsabschnitts (8, 19, 26, 41) angeordnet ist.

5. Leuchte nach einem der Ansprüche 1 bis 4, **dadurch gekennzeichnet, dass** der Konzentrationsbereich (13) eine Brennlinie bildet, auf die der Reflektor (3) ausgelegt ist und dass ein Lotfußpunkt (L) des Lotes (I) von dem Außenrand (4) des Reflektors (3) auf die optische Achse (15) im Bereich eines vorderen Randes (12) des Lichtleitelementes (2, 17, 24, 30, 38) angeordnet ist.

6. Leuchte nach einem der Ansprüche 1 bis 5, **dadurch gekennzeichnet, dass** der Seitenablenkungsabschnitt (8, 19, 26, 41) rotationssymmetrisch ausgebildet ist, wobei die Brennlinie des Konzentrationsbereiches (13) kreisförmig und koaxial zu der optischen Achse (15) des Reflektors (3) verläuft.

7. Leuchte nach einem der Ansprüche 1 bis 6, **dadurch gekennzeichnet, dass** zwischen dem Bauchabschnitt (18) und dem Seitenablenkungsabschnitt (19) ein Einschnürungsabschnitt (20) verläuft, derart, dass an dem Bauchabschnitt (18) eine in Hauptabstrahlrichtung (7) vorne liegende Ringfläche (21) gebildet ist, durch die ein Teillichtbündel (22) im Wesentlichen in Hauptabstrahlrichtung (7) ausgekoppelt wird.

8. Leuchte nach einem der Ansprüche 1 bis 7, **dadurch gekennzeichnet, dass** der vordere Rand des Seitenablenkungsabschnitts mit einer Mehrzahl von Prismen versehen ist.

9. Leuchte nach einem der Ansprüche 1 bis 8, **dadurch gekennzeichnet, dass** der Bauchabschnitt (25, 39) eine zu der Anzahl der Lichtquellen (1) korrespondierende Anzahl von Teilmantelflächen (25', 25", 25"', 40) aufweist, die in Richtung des Seitenablenkungsabschnitts (26, 41) zusammenlaufen.

10. Leuchte nach einem der Ansprüche 1 bis 9, **dadurch gekennzeichnet, dass** der Reflektor (31) und/oder das Lichtleitelement (30) in einer Ebene abgeflacht ausgebildet ist.

## Claims

1. Vehicle light comprising a light source (1), a light conducting element (2, 17, 24, 30, 38) downstream said light source (1) in a primary beam direction which light conducting element (2, 17, 24, 30, 38) on its side facing the light source (1) has a light coupling or input face (9) and on its side facing away from said light source has a lateral deflecting section (8, 19, 26, 35, 41) with a total reflection face (12) such that the light impinging the total reflection face (12) gets cross to the primary beam direction reflected to the light decoupling or output face (14) of the lateral deflecting section (8, 19, 26, 35, 41), and a reflector (3) which extends forward from the plane of the light source (1) between an inner marginal edge and an outer marginal edge in a pot-like manner, **characterized by** the fact that the light conducting element (2, 17, 24, 30, 38) comprises at least one bellied portion (6, 18, 25, 32, 39) with a total reflection face (11) from which incident light (10) is reflected in a forward direction toward the lateral deflecting section (8, 19, 26, 35, 41) and that said light (10) from the total reflection face (12) of the lateral reflection section (8, 19, 26, 35, 41) is converged in a concentrating section (13) disposed within the area of the light decoupling or output face (14) such that said light assumes a fan-shaped pattern within such an angle (β) in one radial plane at least that a surface of the reflector (3) between the inner marginal edge (5) and the outer marginal edge (4) is covered up thereby.

2. Vehicle light according to Claim 1, **characterized by** the fact that the total reflection faces (11, 12) of the bellied portion (6, 18, 25. 32, 39) and the lateral deflecting section (8, 19, 26, 35, 41) are shaped such that the light (10) emitted by the light output face (14) at the outer marginal edge of the lateral light deflecting section (8, 19, 26, 35, 41) is uniformly distributed over the surface of the reflector (3).

3. Vehicle light according to Claim 1 or 2, **characterized by** the fact that the total reflection face (11) of the bellied portion (6) is forming an elliptical shell face in a first focal point (f₁) of which said light source (1) is disposed and in a second focal point (f₂) of which in a junction area between the bellied portion (6, 18, 25, 32, 39) and the lateral deflecting section (8, 19, 26, 35, 41) the incident light (10) is converged.

4. Vehicle light according to any of the preceding Claims 1 to 3, **characterized by** the fact that the total reflection face (12) of the lateral deflecting section (8, 19, 26, 41) is plate-shaped as viewed in radial section and that the concentrating section (13) is disposed in a radially outer marginal area of the lateral deflecting section (8, 19, 26, 41).

5. Vehicle light according to any of the preceding Claims 1 to 4, **characterized by** the fact that the concentrating section (13) is forming a focal line on which the reflector (3) is arranged and that a foot (L) of a plumb line (l) from the outer marginal edge (4) of the reflector (3) to the optical axis (15) is disposed in the area of a forward marginal edge (12) of the light conducting element (2, 17, 24, 30, 38).

6. Vehicle light according to any of the preceding Claims 1 to 5, **characterized by** the fact that the lateral deflecting section (8, 19, 26, 41) is rotationally symmetrical with the focal line of the concentrating section (13) being circular and coaxial to the optical axis (15) of the reflector (3).

7. Vehicle light according to any of the preceding Claims 1 to 6, **characterized by** the fact that there is a reduction in area (20) between the bellied portion (18) and the lateral deflecting section (19) such that the bellied portion (18) has a ring area (21) at its front end as viewed in primary beam direction (7) by which a partial light bundle (22) is put out substantially in primary beam direction.

8. Vehicle light according to any of the preceding Claims 1 to 7, **characterized by** the fact that the forward marginal edge of the lateral deflecting section is provided with a plurality of prisms.

9. Vehicle light according to any of the preceding Claims 1 to 8, **characterized by** the fact that the bellied portion (25, 39) has a number of partial shell faces (25', 25", 25"') which conform to the number of light sources (1) and which converge toward the lateral deflecting section (26, 41).

10. Vehicle light according to any of the preceding Claims 1 to 9, **characterized by** the fact that the reflector (31) and/or the light conducting element (30) is flattened in one of its planes.

## Revendications

1. Feu pour véhicule automobile avec une source de lumière (1), avec un élément conducteur de lumière (2, 17, 24, 30, 38) installé en amont de la source de lumière (1), dans la principale direction de rayonnement, l'élément conducteur de lumière (2, 17, 24, 30, 38) présentant, sur un côté orienté vers la source de lumière (1), une surface de couplage de lumière (9), et, sur un côté opposé à la source de lumière, une section de déviation latérale (8, 19, 26, 35, 41) avec une surface de réflexion totale (12), de sorte que la lumière tombant sur la surface de réflexion totale (12) est réfléchie, perpendiculairement à la direction principale de rayonnement, vers une surface de découplage de lumière (14) de la section de déviation latérale (8, 19, 26, 35, 41, et avec un réflecteur (3), qui s'étend, en forme de pot, à partir du plan de la source de lumière (1), avec un bord intérieur, en avant, dans la zone de celle-ci, jusqu'à un bord extérieur, **caractérisé en ce que** l'élément conducteur de lumière (2, 17, 24, 30, 38) présente au moins une section ventrue (6, 18, 25, 32, 39) avec une surface de réflexion totale (11), à laquelle la lumière incidente (10) est réfléchie en avant, en direction de la section de déviation latérale (8, 19, 26, 35, 41), et **en ce que** la lumière (10) est convergée de la surface de réflexion totale (12) de la section de déviation latérale (8, 19, 26, 35, 41), à un endroit d'une section de concentration (13), qui est disposé dans la zone de la surface de découplage de lumière (14), de telle manière que la lumière (10) forme, en éventail, au moins dans un plan radial, une section d'angle (β), de sorte qu'une surface du réflecteur (3) soit saisie entre le bord intérieur (5) du réflecteur (3) et le bord extérieur (4) dudit réflecteur (3).

2. Feu selon la revendication 1, **caractérisé en ce que** les surfaces de réflexion totale (11, 12) de la section ventrue (6, 18, 25, 32, 39) et de la section de déviation latérale (8, 19, 26, 35, 41) sont formées de telle manière que la lumière (10), qui émerge de la surface de découplage de lumière (14) de la section de déviation latérale (8, 19, 26, 35, 41), disposée sur le côté du bord extérieur, soit uniformément guidée sur la surface du réflecteur (3).

3. Feu selon revendication 1 ou 2, **caractérisé en ce que** la surface de réflexion totale (11) de la section ventrue (6) forme une surface d'enveloppe elliptique, dans le premier foyer (f₁) de laquelle est disposée la source de lumière (1), et qui fait converger la lumière incidente (10) à l'endroit d'un deuxième foyer (f₂), qui est situé dans une zone de transition entre la section ventrue (6, 18, 25, 32, 39) et la section de déviation latérale (8, 19, 26, 35, 41).

4. Feu selon l'une des revendications 1 à 3, **caractérisé en ce que** la surface de réflexion totale (12) de la section de déviation latérale (8, 19, 26, 41) présente une coupe transversale en forme d'assiette et que la zone de concentration (13) est disposée sur le bord extérieur en direction radiale de la section de déviation latérale (8, 19, 26, 41).

5. Feu selon l'une des revendications 1 à 4, **caractérisé en ce que** la zone de concentration (13) forme une ligne focale, en fonction de laquelle le réflecteur (3) est conçu, et qu'un pied de perpendiculaire (L) de la perpendiculaire (1) du bord extérieur (4) du réflecteur (3) sur l'axe optique (15) est disposé dans la zone d'un bord avant (12) de l'élément conducteur de lumière (2, 17, 24, 30, 38).

6. Feu pour véhicule automobile selon l'une des revendications 1 à 5, **caractérisé en ce que** la section de déviation latérale (8, 19, 26, 41) est formée à symétrie de rotation, la ligne focale de la zone de concentration (13) s'étendant circulairement et coaxialement par rapport à l'axe optique (15) du réflecteur (3).

7. Feu selon l'une des revendications 1 à 6, **caractérisé en ce qu'**une section étroite (20) s'étend entre la section ventrue (18) et la section de déviation latérale (19), de sorte que, sur la section ventrue (18), est formée une surface annulaire (21), située en avant dans la direction principale de rayonnement (7), par laquelle un faisceau de lumière partiel (22) est découplé, essentiellement dans la direction principale de rayonnement (7).

8. Feu selon l'une des revendications 1 à 7, **caractérisé en ce que** le bord avant de la section de dérivation latérale est pourvu de plusieurs prismes.

9. Feu selon l'une des revendications 1 à 8, **caractérisée en ce que** la section ventrue (25, 39) présente un nombre de surfaces d'enveloppe partielles (25', 25" , 25''', 40) correspondant au nombre de sources de lumière (1), lesquelles surfaces convergent en direction de la section de dérivation latérale (26, 41).

10. Feu selon l'une des revendications 1 à 9, **caractérisé en ce que** le réflecteur (31) et / ou l'élément conducteur de lumière (30) sont aplatis dans un plan.
